# EUROPEAN PATENT SPECIFICATION

(11) **EP 2 361 447 B1**
(45) Date of publication and mention of the grant of the patent: **12.06.2013**
(21) Application number: 09835634.8
(22) Date of filing: 17.12.2009
(51) Int. Cl.: H01M 12/06, H01M 2/10, H01M 8/04, H01M 12/04

(54) **DEVICE HAVING FLUID CONSUMING BATTERY AND FLUID MANAGER**
EINRICHTUNG MIT EINER FLUIDVERBRAUCHENDEN BATTERIE UND FLUIDMANAGER
DISPOSITIF DOTÉ D'UNE BATTERIE ALIMENTÉE EN FLUIDE ET DISPOSITIF DE GESTION DE FLUIDE

(30) Priority: 22.12.2008 US 139651 P; 16.03.2009 US 160501 P
(43) Date of publication of application: 31.08.2011
(73) Proprietor: Eveready Battery Company, Inc., St. Louis, Missouri 63141 (US)
(72) Inventor: LANGAN, Richard A., Parma Ohio 44129 (US); BALDWIN, Jerald D., Defiance, Missouri 63341 (US); BRANDON, III, Michael J., North Ridgeville Ohio 44039 (US); SCHUBERT, Mark A., Medina Ohio 44256 (US)
(74) Representative: von Kreisler Selting Werner
(86) International application number: PCT/US2009/068455
(87) International publication number: WO 2010/075163

(56) References cited:
- WO-A1-02/35640
- US-A1- 2002 132 161
- US-A1- 2004 023 103
- US-A1- 2004 053 132
- US-A1- 2005 014 047
- US-A1- 2006 032 742
- US-A1- 2008 096 067
- US-A1- 2008 160 373
- US-A1- 2009 042 090

## Description

### BACKGROUND OF THE INVENTION

The present invention generally relates to devices employing fluid consuming batteries, and more particularly relates to controlling the entry of air,into electrochemical batteries having a fluid consuming electrode and a negative electrode including a metal as an active material.

Electrochemical battery cells that use a fluid, such as oxygen and other gases from outside the cell as an active material to produce electrical energy, such as air-depolarized, air-assisted and fuel cell battery cells, can be used to power a variety of portable electronic devices. For example, air enters into an air-depolarized or air-assisted cell, where it can be used as, or can recharge, the positive electrode active material. The oxygen reduction electrode promotes the reaction of the oxygen with the cell electrolyte and, ultimately, the oxidation of the negative electrode active material with the oxygen. The material in the oxygen reduction electrode that promotes the reaction of oxygen with the electrolyte is often referred to as a catalyst. However, some materials used in oxygen reduction electrodes are not true catalysts because they can be at least partially reduced, particularly during periods of relatively high rate of discharge.

One type of air-depolarized battery cell is a zinc/air cell. This type of cell uses zinc as the negative active material and has an aqueous alkaline (e.g., KOH) electrolyte. Manganese oxides that can be used in zinc/air cells are capable of electrochemical reduction in concert with oxidation of the negative electrode active material, particularly when the rate of diffusion of oxygen into the air electrode is insufficient. These manganese oxides can then be reoxidized by the oxygen during periods of lower rate discharge or rest.

Air-assisted battery cells are hybrid cells that contain consumable positive and negative electrode active materials, as well as an oxygen reduction electrode. The positive electrode can sustain a high discharge rate for a significant period of time, but through the oxygen reduction electrode, oxygen can partially recharge the positive electrode during periods of lower or no discharge, so oxygen can be used for a substantial portion of the total cell discharge capacity. This generally means the amount of positive electrode active material put into the cell can be reduced and the amount of negative electrode active material can be increased to increase the total cell capacity. Examples of air-assisted cells are disclosed in commonly assigned U.S. Patent Nos. 6,383,674 and 5,079,106.

A number of approaches have been proposed to control the amount of air entering fluid consuming battery cells. For example, valves have been used to control the amount of air such as those disclosed in U.S. Patent No. 6,641,947, U.S. Patent Application Publication No. 2003/0186099 and U.S. Patent Application Publication No. 2008/0085443. However, some conventional valves are typically difficult to implement with batteries, can require relatively complicated electronics and/or external means to operate the valves and may consume energy from the batteries. Additionally, the conventional valves typically increase the cost of the batteries and/or device.

Further, in many conventional devices, a battery compartment is provided for receiving one or more batteries. However, the management of a fluid such as air to the one or more batteries can be difficult to control. It may be necessary to provide a sealed enclosure of the entire battery compartment or even the entire device in order to control the fluid ingress to the batteries. This can require sealed battery compartment or device walls, a sealed battery compartment lid, and sealed closures around electrical or mechanical connections, which may further increase the complexity and cost of the device.

The aforementioned approaches are typically complex and costly and can shorten the operating life of the batteries. It is therefore desirable to provide for an air manager that does not require energy from the battery and allows for inexpensive, reliable and easy control of fluid entry to a fluid consuming electrode of a fluid consuming battery used in a device.

### SUMMARY OF THE INVENTION

In accordance with one aspect of the present invention, a device is provided that controls the ingress of a/v to a fluid consuming battery employed by the device. The device which is defined in claim 1, includes a battery compartment configured to receive at least one fluid consuming battery having a fluid consuming electrode and a first fluid entry port. The device also includes a second fluid entry port disposed in a portion of the device. The device also includes a fluid flow restrictor disposed between a device wall and the fluid consuming battery such that a rate of flow of a fluid from outside the device to the fluid consuming electrode is controlled by a compressed portion of the fluid flow restrictor.

Embodiments can include any one or any combination of the following features:
● the foam layer can include one or more elastomeric foam materials; the foam material comprises a closed cell foam or an open cell foam;
● the fluid flow restrictor has a firmness of 0.0281 to 4218 g/cm² at 25 percent deflection;
● the flow restrictor includes a plurality of components;
● the flow restrictor includes a plurality of layers; individual adjacent layers can be adhered to each other, or they can be not adhered to each other;
● the fluid flow restrictor includes a fluid control layer and a backing layer; in an embodiment the backing layer is compressible and hase a first fluid permeability, the fluid control layer has a second fluid permeability and the first permeability is equal to or greater than the second fluid permeability; in an embodiment the fluid control layer includes a silicone rubber;
● the device includes a cover, and the fluid flow restrictor is compressed between the cover and the at least one fluid consuming battery;
● the second fluid entry port is formed in a device wall that is not a cover;
● the fluid flow restrictor includes a fluid permeation path from a surface of the fluid flow restrictor adjacent the second fluid entry port to a surface of the fluid flow restrictor adjacent the first fluid entry port;
● the device wall includes an inward projection and the fluid restrictor is compressed between a surface of the projection and a surface of the at least one fluid consuming battery such that the fluid flow restrictor compressed therebetween has a fluid permeability less than a fluid permeability of the fluid permeation path;
● the fluid flow restrictor includes a seal between the device wall and the at least one fluid consuming battery; in some embodiments fluid is able to pass through the second and first fluid entry ports and to the fluid consuming electrode, and fluid is essentially prevented from flowing through the seal; in some embodiments the seal includes an annular seal member; in some embodiments the fluid flow restrictor further includes a portion disposed radially inward from the seal and compressed between the first and second fluid entry ports with a fluid permeation path from a surface adjacent the second fluid entry port, through the compressed central portion, to an opposite surface adjacent the first fluid entry port;
● the fluid consuming battery has a plurality of first fluid entry ports;
● the device has a plurality of second fluid entry ports;
   and
● the at least one fluid consuming battery is replacably disposed in the device.

These and other features, advantages, and objects of the present invention will be further understood and appreciated by those skilled in the art by reference to the following specification, claims, and appended drawings.

Unless otherwise specified herein, all disclosed methods, characteristics, values and ranges are as determined at room temperature (about 20-25°C) and ambient atmospheric pressure and relative humidity. Where numerical values are shown in both Standard International and nonstandard units, the Standard International units are calculated equivalents of the nonstandard units.

### BRIEF DESCRIPTION OF THE DRAWINGS

In the drawings:
FIG. 1 is a perspective view of a device containing a fluid consuming battery, with a battery compartment cover shown in the closed position;
FIG. 2 is a perspective view of the device shown in FIG. 1 with the battery compartment cover in an open position, showing a fluid flow restrictor attached to the cover according to a first embodiment;
FIG. 3 is an exploded perspective view of the device shown in FIG. 1 illustrating the battery, fluid flow restrictor and battery compartment cover;
FIG. 4 is a cross-sectional view taken through line IV-IV of FIG. 1;
FIG. 5 is a perspective partial view of a device employing a fluid flow restrictor attached to the inside of the battery compartment cover, according to a second embodiment;
FIG. 6 is a cross-sectional view of the device shown in FIG. 5 taken through line VI-VI;
FIG. 7 is a perspective partial view of a device illustrating a seal provided on the inside surface of the battery compartment cover for restricting fluid flow to the battery, according to a third embodiment;
FIG. 8 is a cross-sectional view taken through line VIII-VIII of FIG. 7;
FIG. 9 is a flow diagram of a method of designing an air management system for a gas consuming battery;.
FIG. 10 is a plot of limiting current as a function of storage time for PP355 zinc-air cell batteries stored at 21°C and 50 percent relative humidity;
FIG. 11 is a plot of limiting current as a function of storage time for PP355 zinc-air cell batteries stored at 35°C and 75 percent relative humidity;
FIG. 12 is a plot of limiting current as a function of storage time for PP355 zinc-air cell batteries stored at 35°C and 25 percent relative humidity;
FIG. 13 is a table summarizing the limiting current test results from which the plot in Fig. 10 was made;
FIG. 14 is a table summarizing the limiting current test results from which the plot in FIG. 11 was made;
FIG. 15 is a table summarizing the limiting current test results from which the plot in FIG. 12 was made; and
FIG. 16 is a graph of cell current in mA as a function of the percent compression of three types of foam fluid flow restrictors.

### DETAILED DESCRIPTION OF THE INVENTION

Embodiments of this invention include a battery that includes an electrochemical cell that utilizes a fluid (such as oxygen or another gas) from outside the cell as an active material for one of the electrodes. The battery cell has a fluid consuming electrode, such as an oxygen reduction electrode. The battery cell can be an air-depolarized cell or an air-assisted cell . The battery also has a fluid regulator for adjusting the rate of passage of fluid to the fluid consuming electrode (e.g., the air electrodes in air-depolarized and air-assisted cells) to provide a sufficient amount of the fluid from outside the cell for discharge of the cell, particularly at high rate or high power, while minimizing entry of fluids into the fluid consuming electrode and water gain or loss into or from the cell during periods of low rate or no discharge.

As used herein, unless otherwise indicated, the term "fluid" refers to fluid that can be consumed by the fluid consuming electrode of a fluid consuming battery cell in the production of electrical energy by the cell. The present invention is exemplified below by air-depolarized cells with oxygen reduction electrodes

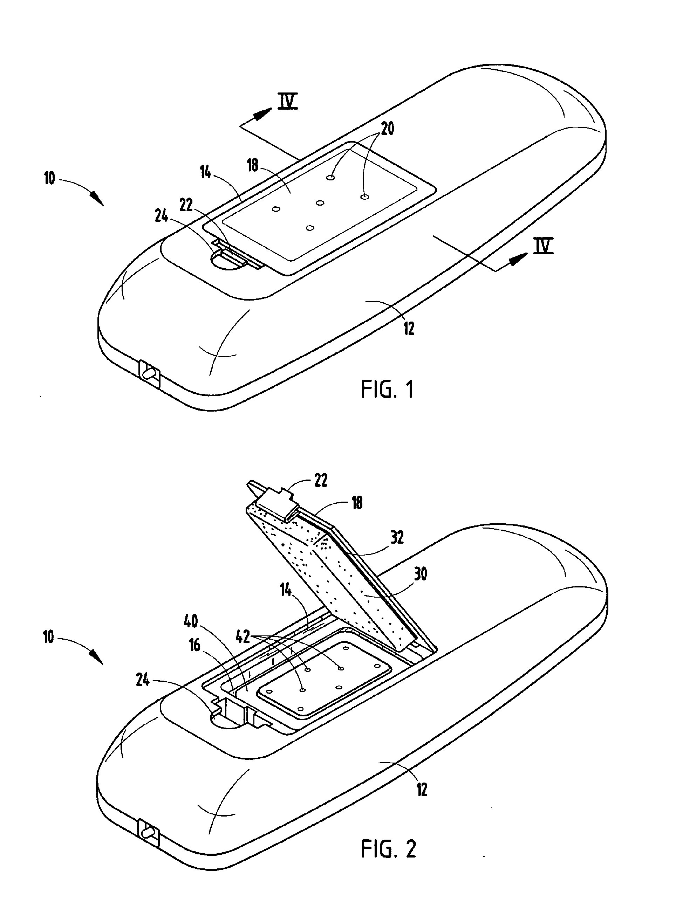

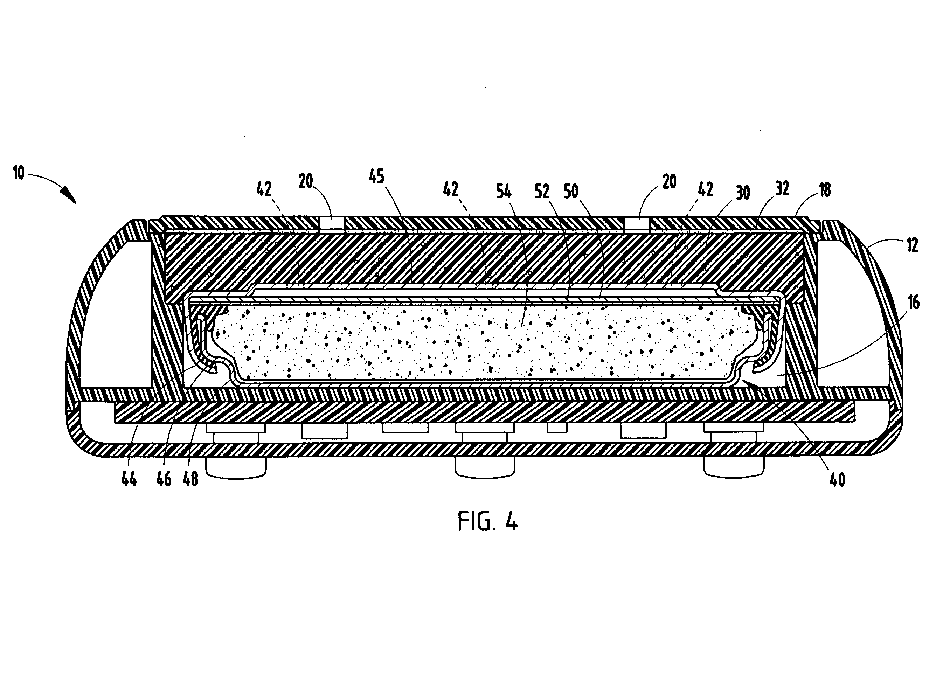

Referring to FIGs. 1-8, an electrical or electronic powered device 10 is generally shown employing a fluid consuming battery 40 and an air manager for managing the ingress and egress of fluid to and from the battery 40, according to various embodiments. The electronic device 10 may be a remote control device, according to one embodiment, as is generally depicted. However, it should be appreciated that the device 10 may be any electronic device that employs a fluid consuming battery within the device including, but not limited to, hearing aids, music players, flashlights, power supply packs and other devices to supply operating electrical power. The air manager controls the ingress and egress of fluid, such as air, passing between the outside environment and the fluid consuming battery 40 to allow for enhanced operation of the device 10 and prolonged service of the battery 40.

In the exemplary embodiment, the fluid consuming battery 40 is shown as an air-dcpolarized battery cell that uses a metal active material in the form of zinc as the negative electrode active material and has an aqueous alkaline (e.g., KOH) electrolyte. The fluid consuming battery 40 includes an electrochemical cell that utilizes a fluid (such as oxygen or another gas) from outside the cell as an active material for one of the electrodes. The battery 40 has a fluid consuming electrode, such as an oxygen reduction electrode. It should be appreciated that the fluid consuming battery 40 may include an air-depolarized cell or an air-assisted cell and that the battery may be prismatic as shown or have other shapes (such as button, cylindrical and square) and may be configured in various sizes, according to various embodiments.

The fluid consuming battery 40 includes a cell housing which may include a first housing component and a second housing component, such as a can 44 and a cover 48, respectively, or may have shapes or sizes differing from what would otherwise be considered a can or cover. For purposes of example, the first housing component is hereinafter referred to as the can 44, while the second housing component is hereinafter referred to as the cover or cup 48. The can 44 and cover 48 are both made of an electrically conductive material, but are electrically insulated from one another by means of a gasket 46, for example. In some embodiments the can 44 serves as the external positive contact terminal for the fluid consuming battery 40, whereas cover 48 serves as the external negative contact terminal. The battery 40 further includes a first electrode 50, which may be the positive electrode (i.e., cathode) and is a fluid consuming electrode, referred to as an air electrode in the disclosed embodiment, a second electrode 54, which is the negative electrode (i.e., anode), and a separator 52 disposed between the first and second electrodes 50 and 54. The fluid consuming electrode 50 may include a catalytic material such as manganese oxide, an electrically conductive material such as carbon or graphite, and a binder such as polymer resin. The negative electrode 54 may include a metal such as zinc and an aqueous alkaline electrolyte containing KOH or NaOH, for example. The fluid consuming first electrode 50 is electrically coupled to the can 44, whereas the second electrode 54 is electrically coupled to the cover 48.

The can 44 generally includes a surface 45 in which one or more fluid entry ports 42 are provided so that air may pass to the interior of the battery cell housing so as to reach the fluid consuming electrode 50. In the embodiment shown, the can 44 has eight (8) fluid entry ports 42 provided in the top surface 45 of the can 44, however, it should be appreciated that any of a number of fluid entry ports 42 of various sizes and shapes may be employed to allow fluid to pass to the fluid consuming electrode 50 through the air manager, which provides controlled air access and distribution to the fluid consuming electrode 50.

The device 10 is illustrated having a housing 12 with top, bottom and side walls and an opening 14 leading to a battery compartment 16 formed in the housing 12. The battery compartment 16 includes the opening 14 configured with a size and shape adapted to receive one or more fluid consuming batteries 40. It should be appreciated that while a single battery 40 is illustrated herein, the device 10 may employ one or more fluid consuming batteries 40. The device 10 generally includes electrical connections (not shown) that allow for electrical contact to be made between each of the fluid consuming batteries 40 and electrical circuitry within the device 10, as should be evident to those skilled in the art. The electrical connections may include conductive contacts arranged in the battery compartment so as to make contact with the battery terminals, such as the side of the can 44 and the bottom of the cover 48, generally outside of the fluid flow restrictor 30 and the seal area provided thereby.

Included in the housing 12 is a lid or cover 18 that defines a top surface over the battery compartment 16. The cover 18 may be opened by a user to allow access to the battery compartment 16 and may be closed to cover the battery compartment 16 and fluid consuming battery 40. To ensure closure of the cover 18, the cover 18 may include a locking tab 22 that engages a slot 24 in the device housing 12 to hold the cover 18 in the closed position. The user may then actuate the tab 22 to disengage the connection with slot 24 and pivot the cover 18 to an open position, when the battery 40 needs to be removed and/or inserted.

Referring now to FIGs. 1-4, the device 10 is illustrated employing an air manager in the form of a fluid flow restrictor 30, according to a first embodiment. The fluid flow restrictor 30 may be disposed against the interior surface of cover 18. The fluid flow restrictor 30 can be a single component having a single layer made from a fluid permeable and compressible material that can control the rate of flow of a fluid between the outside environment and the fluid entry ports 42 of the battery 40. In addition, the fluid flow restrictor 30 can provide a fluid seal against the top face of the fluid consuming battery 40 when the cover 18 is in the closed position so that fluid does not flow unrestricted between the fluid entry ports 20 and the top surface 45 of the battery 40. According to one embodiment, the seal provided by the fluid flow restrictor 30 may allow for permeation of fluid, such as air, from fluid entry ports 20 in the cover, through the thickness of fluid flow restrictor 30, to the fluid entry ports 42 of the battery 40, while preventing unrestricted fluid flow from the lateral sides of the fluid flow restrictor 30. According to another embodiment, the fluid flow restrictor 30 may provided a first permeation path of a first permeation rate from the fluid entry ports 20 to fluid entry ports 42 and a second permeation path from the lateral sides of fluid flow restrictor 30 at a second permeation rate, such that air may transfer in axially from the side, if desired. In yet another embodiment (not shown), the fluid entry ports 20 can be located outside the interface between the cover 18 and the fluid flow restrictor 30, such as in another surface of the battery compartment 16, and/or a gap between the cover 18 and the opening 14 can function as a fluid entry port. In this embodiment, the fluid flow restrictor 30 provides a permeation path from a lateral side of the fluid flow restrictor 30 to the fluid entry ports 42. The fluid flow restrictor 30 may be configured in different ways so as to have different air permeation rates for different devices.

The fluid flow restrictor 30 can be adhered to a surface of the battery compartment 16 (e.g., cover 18) by way of an adhesive layer 32. The adhesive 32 may include an acrylic based adhesive, for example. By adhering the fluid flow restrictor 30 to the inside surface of the battery compartment 16, the fluid flow restrictor 30 may be easily used with different batteries, as different batteries are installed into and exchanged from the device 10. In one embodiment, the adhesive layer 32 may be arranged on the fluid flow restrictor 30 so as not to block the fluid entry ports 20 in the cover 18. According to other embodiments, the adhesive layer 32 may cover the fluid entry ports 20 and may be selected to act as a fluid permeation control layer having a desired fluid (e.g., air) permeation rate to regulate fluid flowing therethrough. In other embodiments the fluid flow restricting material can be adhered to another interior surface of the battery compartment 16, or disposed in the device without an adhesive. Fluid entry ports 20 can be located in the lid 14 or another portion of the battery compartment 16, and/or a gap between the cover 18 and the opening 14 can function as a fluid entry port.

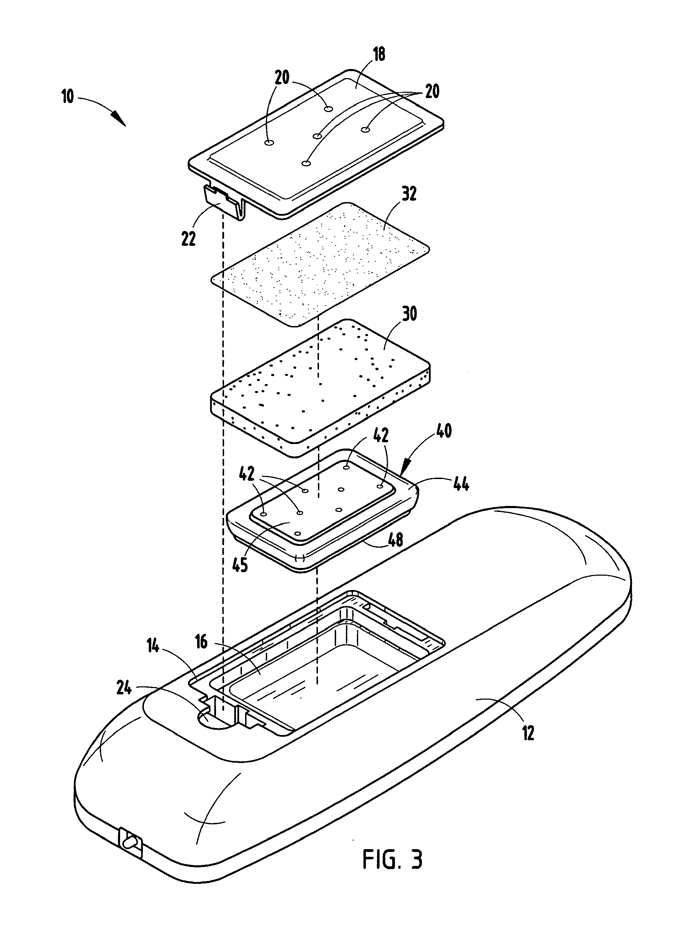

As seen in FIGs. 2 and 3, the fluid flow restrictor 30 can have a shape and size configured similar to that of the top surface 45 of the battery 40 and consumes the volume of space between the cover 18 and the fluid consuming battery 40, particularly in the area between the fluid entry ports 20 and fluid entry ports 42, when the cover 18 is closed. The fluid flow restrictor 30 restricts the flow of fluid from the outside atmosphere to the fluid consuming battery 40 at a controlled fluid permeation rate. The fluid flow restrictor 30 controls fluid access based on the fluid permeability of the compressed fluid flow restrictor material. When the cover 18 of the battery compartment 16 is closed, the fluid flow restrictor 30 is compressed between the inside surface of the cover 18 and the top surface 45 of the fluid consuming battery 40 to provide for a fluid seal against the surface 45 of the battery 40, such that fluid access to the fluid entry ports 42 in the can 44 is restricted by the fluid flow restrictor 30.

According to one embodiment, the fluid flow restrictor 30 includes a compressible foam layer that allows for dimensional variations in the fluid consuming battery 40 and battery compartment 16, including cover 18. The fluid flow restrictor 30 may include a foam material that is compressible, air restrictive and has one or more layers that act as a throttling mechanism through which fluid passes to reach the fluid consuming battery 40 in the device 10. The fluid flow restrictor 30 also provides a predictable and reproducible seal against the surface 45 of the battery 40 and maintains the fluid seal by way of compression due to the resiliency of the foam material. The surface of the fluid flow restrictor 30 against the fluid consuming battery 40 can restrict air diffusion, while the bulk of the fluid flow restrictor 30 can be less restrictive to air diffusion. The opposite surface of the bulk material can be reliably secured to a device compartment wall, such as cover 18, by way of an adhesive, or other suitable means of securing the fluid flow restrictor 30 can be used. The types of materials used for the fluid flow restrictor 30 can vary, and the sealing requirements may vary, as a function of the type of device and its use.

The fluid flow restrictor 30 may have any of the following desirable properties. The foam material may have an open or closed cell foam structure, and optionally one or more surfaces may have a skin on bulk foam or a secondary semi-permeable layer. In some embodiments the foam material may include an elastomeric foam material with a quick recovery (low compression set/high recovery) to provide a resealable battery compartment 16. The elastomer may be a resilient cured, cross-linked or vulcanized elastomer, for example. Examples of suitable elastomeric foam materials include one or more of a polyurethane elastomer, a polyethylene, a polychloroprene (neoprene), a polybutadiene, a chloro isobutylene isoprene, a chlorosulphonated polyethylene, an epichlorohydrin, an ethylene propylene, an ethylene propylene diene monomer, an ethylene vinyl acetate, a hydrogenated nitrile butadiene, a polyisoprene, a isoprene butylene (butyl), a butadiene acrylonitrile, (e.g., BUNA-N™ from Ashtabula Rubber Co.), a strene butadiene, (e.g., BUNA-S™ from Ashtabula Rubber Co.), a flurorelastomer (e.g., VITON® and KALREZ® from DuPont), a silicone, and derivatives thereof.

According to one embodiment, a foam type fluid flow restrictor 30 may include a foam layer and an adhesive layer 32 on one side, to adhere to a surface of the battery compartment 16 such as the cover 18 or to the surface of the battery 40 in which the fluid entry port(s) 42 are located. A wide variety of foam materials are commercially available. One example is a polyurethane foam such as McMaster Carr Catalog No. 86375K161 (manufactured as part number 4701-60-20031-04 by Rogers Corporation), which is a trilateral sheet of an open cell polyurethane foam with a skin on both surfaces and an adhesive layer 32 on one side. Another example of an open cell foam is McMaster Carr Catalog No. 86375K132, which is a polyurethane open cell foam sheet with a skin on both surfaces and no adhesive layer. Another example of a foam material is a polyethylene foam such as McMaster Carr Catalog No. 8722K622, which is a sheet of closed cell polyethylene foam with a skin on one side and no adhesive layer. Yet another example of a foam material is an ethylene vinyl acetate foam, such as McMaster Carr Catalog No.86095K41, wich is a sheet of closed cell ethylene vinyl acetate foam with no skin or adhesive layer. Foams made from other materials may be used. When the foam material includes an adhesive layer for adhering the fluid flow restrictor to a surface of the cell having the fluid entry port(s) or to a surface of the battery compartment such as the cover, a removable protective layer may cover the adhesive until the fluid flow restrictor is applied to the cell or the device battery compartment.

The fluid flow restrictor material preferably has a low creep and is resistant to oxidation and degradation by the battery electrolyte and environmental conditions such as humidity. The material may come in a sheet form, an adhesive backing may be provided, and/or the material may be purchased in bulk with the adhesive for ease of application to the device. The material preferably will be physical stable in a device using a temperature range of at least -40°C to +90°C. The material may have a firmness in the range of 0.0281 to 7031 g/cm² (0.4 to 100 psi) at 25 percent deflection (i.e., when compressed to 25 percent of the original thickness), preferably no greater than 4218 g/cm² (60 psi) at 25 percent deflection, more preferably no greater than 1758 g/cm² (25 psi) at 25 percent deflection, and most preferably no greater than 1055 g/cm² (15 psi) at 25% deflection. The material should further include suitable tensile strength, shear strength, stretch limit and density. The material may have a surface finish of a desired roughness; it may be oil, abrasive, tear, impact, weather, chemical, electrical and flame resistant; and it may have an acceptable moisture sensitivity that does not adversely affect performance.

It should be appreciated that the foam material can include multiple layers, as described in further detail regarding fluid flow restrictor 60 below. For example it may have an added skin layer on one or both sides, and one skin layer may be in contact with the can 44. The additional skin layer may include a fluid restricting material, such as silicon rubber, to minimize lateral fluid (e.g., air) leakage (i.e., unrestricted fluid flow through the interface between the foam layer 30 and the can 44). The fluid permeability of the foam material and the added skin layer may be the same, or the permeabilities may be different, such that the skin layer is a more restricting material that provides the air flow rate control for example.

One or more skin layers can be formed by altering the foam material with heat, chemicals or a combination of heat and chemicals to achieve a control layer with a desired fluid permeation rate. By melting or dissolving the surface of the foam material in this way to reduce the porosity thereof, a desired permeability may be achieved.

The force required to compress the foam material against the can 44 and the percent foam compression may be determined to achieve optimal electrical performance of the battery 40 for the device 10. Fluid consuming battery cells, restricted by the fluid flow restrictor 30, may be electrically tested to determine the maximum sustainable discharge rate capability of a cell with a fluid flow restrictor 30 providing fluid control to the cell. This can be done by compressing the foam material against the top surface 45 of the can 44, covering fluid entry ports 42, holding the cell at a constant voltage (such as 1.0 volt) for sufficient time to consume the amount of fluid that can be contained within the fluid flow restrictor 30 in the space between the fluid consuming electrode 50 and the inside surface of the top of the can 44, and then measuring the cell current at the end of that discharge time on cells. The testing can be done with the fluid flow restrictor 30 compressed by different amounts to determine the optimal compression based on the current requirements for a particular device 10.

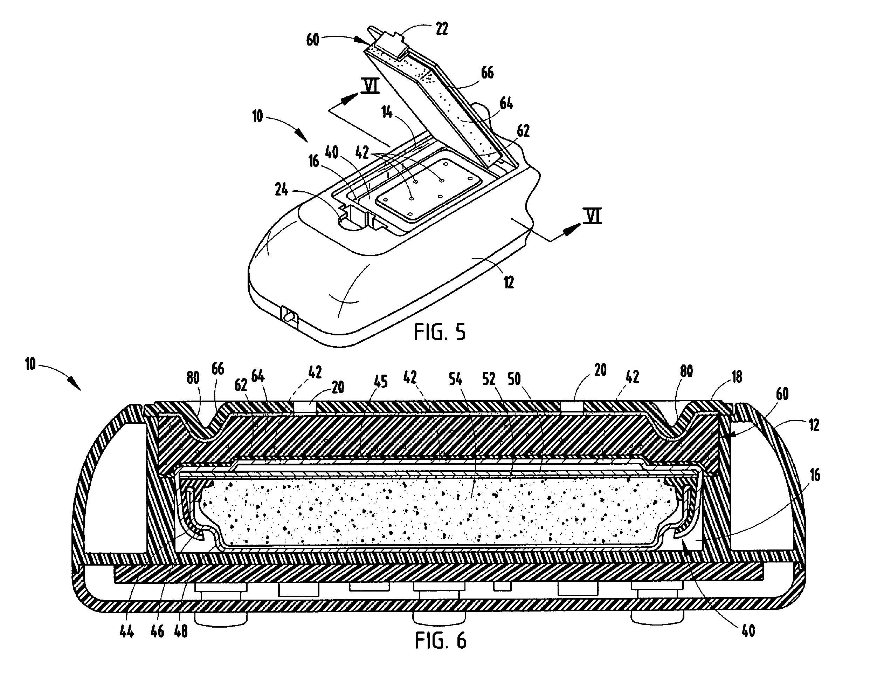

Referring to FIGs. 5 and 6, a device 10 according to another embodiment is illustrated having an air manager including a fluid flow restrictor 60 for controlling the ingress and egress of fluid to the fluid consuming battery 40. In this embodiment, the fluid flow restrictor 60 includes a fluid control layer 62 and a backing layer 64. The backing layer 64 provides a force to hold the battery down when the battery compartment cover 18 is in the closed position and allows for dimensional variations in the battery 40 and compartment cover 18. Backing layer 64 also allows fluid to pass relatively unrestricted compared to the fluid control layer 62. The fluid control layer 62 provides a seal on the face 45 of the battery 40 and controls fluid access based on fluid permeability of the fluid control layer material. The fluid flow restrictor 60 advantageously provides a permeability of fluid control layer 62 that is independent of the amount of compression of the fluid flow restrictor 60, as essentially only the backing layer 64 is compressed. Additionally, an adhesive layer 66 on the backing layer 64 can be provided to adhere the fluid flow restrictor 60 to an inside surface of the battery compartment 16, such as cover 18. Preferably, the fluid permeability of the backing layer 64 is great enough that the rate of fluid flow (permeability rate) through the fluid flow restrictor 60 is not limited by the backing layer 64.

In the embodiment shown in FIGs. 5 and 6, the backing layer 64 may be made of a resilient foam material that provides a seal to prevent leakage of fluid between the fluid flow restrictor 60 and the top surface 45 of the can 44 when sufficiently compressed and allows fluid to pass relativly unrestricted from the outside environment through the fluid entry ports 20 to the fluid control layer 62. Examples of backing layer 64 may include foams such as those described above. The foam may be an open cell foam which has a very low compression set (i.e., good compression recovery to near its original uncompressed thickness), and preferably the fluid permeability of the backing layer 64 is greater than the fluid permeability of the fluid control layer 62.

The inside surface of the cover 18 may be configured with an inward protrusion 80, shown in this embodiment generally as a U-shaped protrusion extending generally around the top surface 45 of the fluid consuming battery 40 containing the fluid entry ports 42. The protrusion 80 extends sufficiently downward so as to provide a highly compressed ring in the fluid flow restrictor 60 so as to provide for enhanced sealing to prevent or reduce lateral permeation of fluid. The protrusion 80 may come in various sizes and shapes and may be employed in other embodiments described herein to provide for an enhanced sealing function by compression of the foam.

The fluid control layer 62 may provide fluid permeation that depends upon the total surface area of the ports 42 and the permeation path length (e.g., thickness) and fluid permeation rate of the material. The fluid control layer 62 may be in the form of one or more skin layers that block liquid and allow air to pass through the layer 62 of a controlled rate. The fluid control layer 62 may be less porous than the the backing layer 64.

As described above, a skin layer can be formed by applying heat or chemicals to a surface of the backing layer 64, or the fluid control layer 62 can be made from a different material, such as silicone or a silicone rubber. Silicone rubber is generally permeable to oxygen, and can thereby controls the rate of flow of oxygen into a fluid consuming battery cell 40. Silicone rubber blocks liquid but has a higher permeability to gases such as oxygen, so it can allow gas to pass through at a controlled rate. According to one example, a silicone rubber fluid control layer 62 may have a maximum thickness of about 0.82 millimeters (0.032 inch) to allow the minimum amount of oxygen to enter the battery cell 40. As the surface area changes, the maximum thickness may be changed proportionally. Given the surface area, oxygen permeability rate and permeation path length requirements, the optimal oxygen control layer 62 may be provided for each battery cell depending on the battery cell and device current draw requirements.

While a single layer fluid flow restrictor 30 and a double layer fluid flow restrictor 60 are shown and described herein according to some embodiments, it should be appreciated that the foam materials may employ other multiple layers, such as three or four layers. Additionally, it should be appreciated that the material 60 may be formed to have the backing layer 64 and skin layer 62 by altering a single layer of foam with heat or chemicals to form the control layer 62 having the desired air or fluid permeation. This may be achieved by melting or dissolving the surface of the foam to reduce the porosity, according to one embodiment.

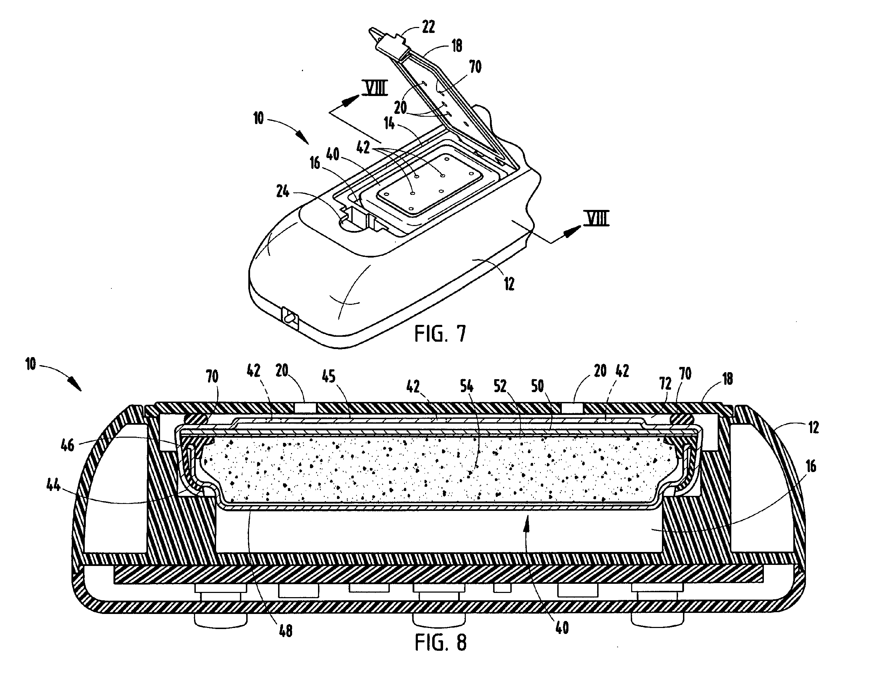

Referring to FIGs. 7 and 8, the device 10 is illustrated employing a sealed closure between the inside surface of cover 18 and the top surface 45 of the fluid consuming battery 40, according to a third embodiment. In this embodiment, a seal member 70, such as an annular seal (e.g., an O-ring type seal, though not necessarily having a round shape), is disposed against the inside surface of the cover 18. The seal member70 provides the primary seal against the fluid consuming battery 40 in a region outside of the fluid entry ports 42 so as to expose the fluid entry ports 42 to the openings 20 in the cover 18. With the cover 18 in the closed position, the seal member 70 is forced against the top surface 45 of the battery and retained in place to provide an adequate sealing force against the top surface 45 of the battery 40. In this embodiment, a gap exists providing a plenum 72 between the fluid entry ports 42 in the battery can 44 and the battery compartment cover 18 with the fluid entry ports 20 provided therein. The plenum 72 is sealed from the rest of the device 10 such that fluid can enter and exit the fluid entry ports 20 in the cover 18 and can enter and exit fluid ports 42 in the battery 40 to ensure proper fluid access to the battery 40, and the seal member 70 thereby essentially preventing fluid from flowing to the fluid entry ports 42 from elsewhere within the battery compartment 16 and device 10 such that the flow of fluid into the plenum 72 is controlled according to the number and size of the fluid entry ports 20. The seal member 70 may include a thermoset elastomer having a low permeability rate that does not allow sufficient fluid leakage to operate the device 10 in normal full operation. However, the material for the seal member 70 may be selected to allow more fluid permeation, e.g., sufficient to maintain a desired open circuit voltage of the battery or to operate the device 10 in a reduced functionality or "sleep" mode. Examples of thermoset elastomer materials that can be used include acrylonitrile-butadiene rubber, ethylene propylene diene rubber (EPDM), silicone, acrylonitrile butadiene isoprene, neoprene and fluoroelastomers (such as copolymers of hexafluoropropylene and vinylidene fluoride, and terpolymers of tetrafluoroethylene, vinylidene fluoride and hexafluoropropylene).

While an open volume plenum 72 is shown and described in this embodiment, it should be appreciated that one of the fluid flow restrictor 30 or 60 may be inserted between the cover 18 and battery 40 and used in combination with the seal member 70, according to further embodiments. In doing so, the fluid flow restrictor 30 or 60 may be provided radially inward of the seal member 70, and fluid flow restrictor 60 may include a backing layer 64 and a control layer 62, for example. The maximum rate of fluid flow into the battery 40 can be limited by the number and size of the fluid entry ports 42 in the battery can 44 or fluid entry ports 20 in the cover 18.

In embodiments with a foam type of fluid flow restrictor, it is generally desirable for the foam to be compressed by more than about 10% when the battery is installed in the battery compartment and the battery compartment is closed. Preferably the foam is compressed by at least about 25%, more preferably by at least about 40%. If the foam is not compressed enough, the fluid permeability of the fluid flow restrictor may be too great or the seal between the fluid flow restrictor and the battery may be poor, resulting in reduced battery service life. On the other hand, excessive compression of the foam can result in insufficient fluid flow to the battery to operate the device properly or a more rapid degradation of the foam characteristics (e.g., firmness, compression recovery and fluid permeation); so preferably the foam is compressed no more than about 75%, more preferably no more than about 60%.

The device 10 advantageously provides for a single solution approach that allows for various devices to be provided with unique fluid control layers, such that a device manufacturer can offer different models with different discharge requirements for the fluid consuming battery 40 for example. While various embodiments of a fluid manager have been disclosed and described herein, it should be appreciated that the various fluid managers described above may be used alone or in combination with each other and may further be used in combination with other types of fluid managers, including active and passive fluid managers located in the device 10 or located within or connected to the fluid consuming battery 40.

There are different degrees of air management starting with no air management, proceeding on to a simple air restriction like throttling, and then a more complicated open-and-close valve. In general, it is desirable to use the degree of air management that is the most simple and least expensive to meet the needs of an electronic device to be powered by the gas consuming battery.

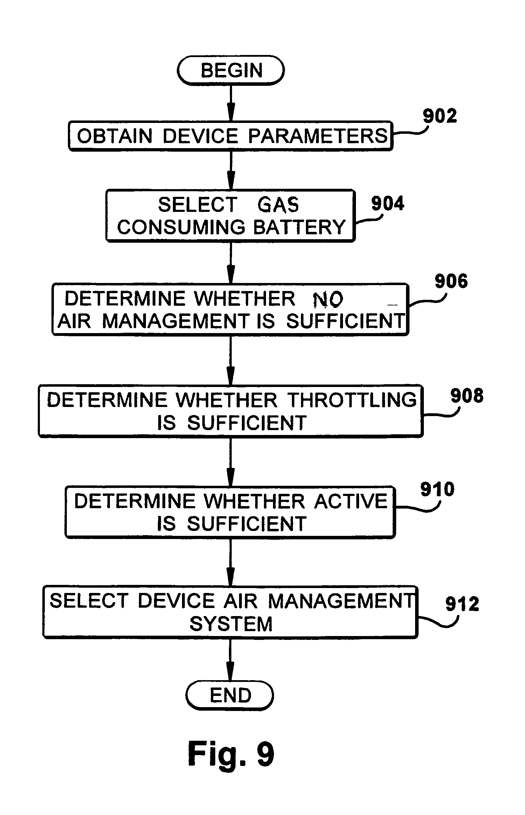

FIG. 9 is a flow diagram illustrating a method 900 for determining an appropriate type of air manager. The method 900 includes selecting one of several air management options including no air management, passive air management (e.g., constant throttling, using an air manager with a fluid flow restrictor such as described above and illustrated in FIGs. 1-8 for example), and active air management (e.g., opening and closing a valve or variable throttling) for a gas consuming battery. Air management provides control over the ingress and egress of air and other gases passing between the outside environment and a gas consuming battery cell. Unless otherwise specified, the term "throttle" and variations thereof refer to a constant rather than a variable restriction of the flow of air or other gases by an air manager.

The method 900 begins at block 902, wherein device parameters for a device are provided or obtained. The device may include electronic device(s) that employ a gas consuming battery within the device, including but not limited to hearing aids, music players, flashlights, power supply packs and other devices to supply operating electrical power. An example of a device is the device 10 shown in FIG. 1. The parameters include information about the device, such as operational power requirements, operating temperatures, patterns of power usage, operation time, non-use time, and operational lifetime. The operational power requirements can include, for example, an average power use, a maximum power use, the type of power consumption (e.g., constant power, constant current, constant resistance or constant voltage), and the like. The pattern of use is the typical or expected usage pattern for a device, such as continuous, varying and intermittent, and the relative durations of each. In one example, the pattern is continuous power. In another, the pattern is intermittent usage with periods of a first power usage followed by periods of varied power usage. The operational lifetime is the total expected or desired length of time for which the device is expected to be in use (including operation and non-use time), from the time when the battery is first activated, without replacing or recharging the battery. The non-use time, also referred to as shelf life, is a period of time in which the device is inactive after installing or charging a battery and includes time before an initial use of the device and time after initial use but before the battery is removed or its capacity is essentially fully used.

A gas consuming battery is selected at block 904. In an exemplary embodiment, the battery is an air-depolarized battery cell that uses a metal active material in the form of zinc as the negative electrode active material and has an aqueous alkaline (e.g., KOH) electrolyte. The gas consuming battery includes an electrochemical cell that utilizes a gas (such as oxygen) from outside the cell as an active material for one of the electrodes. The battery has a gas consuming electrode, such as an oxygen reduction electrode. It should be appreciated that the gas consuming battery may include an air-depolarized cell, an air-assisted cell or a fuel cell, and that the battery may be prismatic as shown or have other shapes (such as button, cylindrical and square) and may be configured in various sizes, according to various embodiments. In this embodiment, the battery itself does not contain an air management system. However, it is appreciated that alternate embodiments may include an air consuming battery with an air management system.

A determination is made at block 906 as to whether the device parameters can be met by the battery with no air management. Battery operational characteristics with no air management are referenced in order to make this determination. No air management means that the battery is supplied air in sufficient quantity to permit the maximum discharge rate (current, power, etc.) of which the battery is capable. In one example, a graph showing current versus time for the battery with no air management is referenced to see if the characteristics are suitable.

A determination is made at block 908 on whether inactive (i.e., passive) air management is sufficient to meet the device requirements. Battery operational characteristics with with inactive air management are referenced in order to make this determination. Inactive air management, also referred to as throttling, means that the battery is supplied air in limited, essentially constant quantities to limit discharge rate to less than the full discharge rate at which the battery is otherwise capable of operating. In one example, a graph showing current versus time for the battery with throttling air management is referenced to see if the characteristics are suitable.

A determination is made at block 910 as to whether active air management is sufficient to meet the device requirements. Battery operational characteristics with active air management are referenced in order to make this determination. The use of active air management allows the battery to be supplied air in sufficient quantities to permit the maximum discharge rate needed by actively providing or supplying fluid when discharging and mitigating the supply of air when less than the maximum discharge rate is required. A suitable seal is needed to sufficiently limit air access to the battery when not substantially discharging the battery. A graph showing current versus time for the battery with active air management can be referenced to see if the characteristics are suitable.

A suitable battery and suitable air management mechanism(s) are selected at block 912. If air management is to be incorporated into the device, the device can then be fabricated with the selected air management mechanism(s) and seal for a battery compartment of the device.

Air management can be advantageous by reducing undesirable effects of exposing the gas consuming battery to the external environment after the battery is initially activated (e.g., by removing a sealing tab from the air entry ports of the battery or by removing the battery from a sealed container). For example, when an alkaline zinc-air battery is exposed to air outside the battery, a portion of the discharge capacity of the battery is consumed as oxygen is reduced and zinc is oxidized, even when the battery is not providing power to a device. The reaction of carbon dioxide in air from outside the battery with the alkaline electrolyte of the battery and water vapor exchange with the external atmosphere can both result in a reduction in the battery rate capability (the maximum current the battery can provide) over time; generally the effects due to carbon dioxide are greater than those due to water gain and loss. The degradation in rate capability has been found to typically have a significantly greater negative effect on battery performance than the loss of discharge capacity.

For example, the rate capability of a battery over time can be determined by testing the limiting current of sample batteries at various times, preferably under the expected conditions (e.g., temperature and humidity) of battery use, for batteries with no added air management and for batteries with different degrees of throttling. If the initial rate capability is insufficient to meet the maximum current requirement of the device to be powered by the battery, that battery type is not suitable and another battery type can be selected or the battery can be modified to increase its rate capability. If the initial rate capability is satisfactory, the maximum time the required rate capability can be maintained when fully opened and when throttled can be compared to the desired time over which the battery is to be used, and the degree of throttling, if any, needed to provide the desired use time selected. If constant throttling is not sufficient, the rate capability data can be used to determine if valving is sufficient to meet the requirements of the device and, if so, what degrees of sealing is suitable when the valve is closed and what degree of restriction of air flow is suitable when the valve is in an open position (fully or partially open).

Limiting current can be tested in various ways, and the particular test used can be selected based on a particular electronic device or category of devices or based on a selected throttling condition for example. In one type of limiting current test, the current is measured after a specified period of time, such as 30 seconds (to allow the current to reach a substantially steady state), at a constant voltage, such as 1.1 volt. The limiting current can be tested with the battery throttled or unthrottled. Testing can also be done under a variety of environmental (e.g., temperature and humidity) conditions. Unless otherwise specified, the limiting current test used in this exemplary embodiment is the current in milliamps (mA) after 30 seconds at a constant voltage of 1.1 volt for an unthrottled battery tested at 21 °C and 50 percent relative humidity.

Sample batteries can also be tested to determine discharge capacity under one or more discharge regimens. This can be done at various times, different environmental conditions and/or with different degrees of throttling if desired. The results can be compared to a desired minimum discharge capacity to confirm that the selected battery has the desired capacity initially and/or after a period of time without or with throttling.

Using rate capability data, supplemented with capacity data if desired, the method described above and shown in FIG. 9 can be used to determine if air management is necessary and, if so, whether constant throttling or valving is sufficient in an air management system. If constant throttling is sufficient, the data can be used to determine the desired degree of throttling needed, from which the air permeability properties can be defined and suitable materials selected. If a further increase in overall operational lifetime is desired, active air management can be considered. For example, the maximum current requirements for two or more device operational modes can each be compared to the rate capability data, and the overall operational lifetime can be determined from the data and the expected proportion of time the device will be in each of the operational modes. Valve positions can be established to provide the desired degree of air restriction to the battery for each operational mode.

### Example 1

PP355 prismatic zinc-air battery cells were tested with and without fluid flow restrictors. A PP355 battery is a single cell, prismatic alkaline zinc-air battery with a generally rectangular cross section and having a length of about 32.2 mm, a width of about 13.7 mm and a height of about 5.0 mm. The total area of the fluid entry ports in the top of the cathode can was 8.46 mm². A sheet of polyurethane foam about mm (0.031 inch) thick, with a skin layer on both sides and an adhesive layer on one side (McMaster Carr Catalog No. 86375K161 which is Product number 4547, Product Description 4701-60-20031-04, manufactured by Rogers Corporation), was cut into pieces large enough to completely the top of a cathode can. Additional information about the foam is included in Table 1 below. Each piece of foam was mounted to a rigid non-porous plate using the adhesive layer. Cells were prepared for testing with no foam, with fresh foam and with reused foam. For cells to be tested with foam, a mounted piece of foam was placed against the top of the can of each test cell and compressed against the cell with a 907.2 kg (2 pound) weight (sufficient weight to compress the foam between two flat plates by an amount equal to 59 percent of the original foam thickness) so the foam would function as a fluid flow restrictor, controlling the rate at which air could enter the cell through the fluid entry ports.

After holding each of the cells at a constant voltage of 1.0 volt for 48 hours, the cell currents were measured at 1.0 volt. There was little difference between the fresh and reused foams, both of which had a current rate of approximately 1 milliamp (equivalent to an air permeation rate of 0.0167 cm³/min.) versus approximately 100 milliamp (equivalent to an air permeation rate of 1.67 cm³/min.) for the cells of the same type that did not have a piece of foam compressed against the top of the cathode can. The testing showed that the foam was effective in reducing the rate of oxygen entry into the cell by a factor of about 100, and that the foam can be reused without significantly changing the fluid permeation rate of the foam.

### Example 2

PP355 cells were tested as in Example 1 with three different types of foam materials compressed by varying amounts. Descriptions of the foams are found in Table 1.

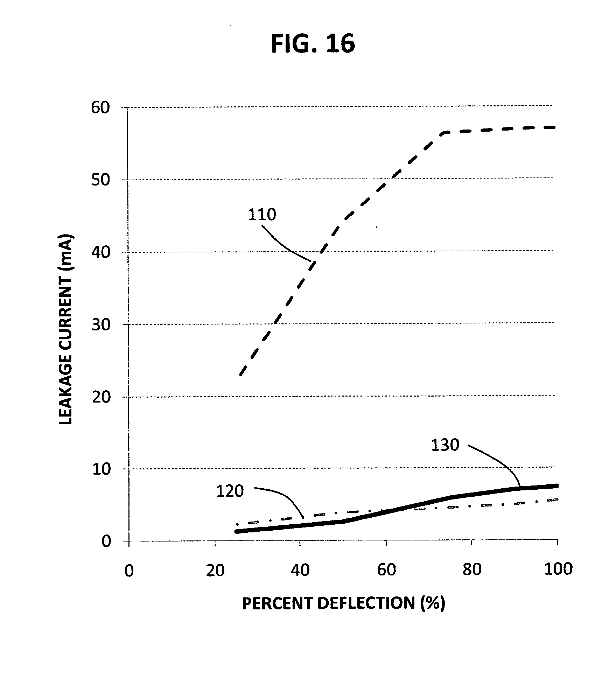

The results are summarized in FIG. 16, which is a graph of cell current in mA as a function of percent deflection of the foam, with the curves extrapolated to 100 percent deflection. The results show that different types of foam materials (e.g., Foam A 110, Foam B 120 and Foam C 130, as described in Table 1) can have different fluid permeation rates, and the measured current (and the air and oxygen permeation rates) decreases with increasing compression (i.e., decreasing deflection). From FIG. 16, at 59 percent deflection, Foam B 120 would be expected to allow sufficient oxygen to permeate to provide a current of 3.2 mA mA (0.05 cm³ of air per minute), and Foam C 130 would be expected to allow sufficient oxygen to permeate to provide a current of 2.4 mA (0.04 cm³ of air per minute). The closed cell foams (B 120 and C 130) had a lower oxygen permeation rate than open cell Foam A 110.

**Table 1**

| | Foam A Catalog No. 86375K132 | Foam B Catalog No. 8722K622 | Foam C Catalog No. 86095K41 |
|---|---|---|---|
| Material type | polyurethane | polyethylene | ethylene vinyl acetate |
| Backing | adhesive | none | none |
| Adhesive material | acrylic based | | |
| Thickness | (1/32 inch) | (1/16 inch) | (1/8 inch) |
| Temperature range | -40°F to +194°F | -110°F to +180°F | -70°F to +160°F |
| Density | 30 lbs./cu. ft. | 4 lbs./cu. ft. | 2 lbs./cu. ft. |
| Foam structure | open cell | closed cell | closed cell |
| Firmness at 25% deflection | 914 g/cm² (13-23 psi) | 914 g/cm² (13 psi) | 352 g/cm² (5 psi) |
| Compression recovery | good | good | good |
| Finish | smooth | textured | textured |
| Texture type | | fine cell | fine cell |
| Skin | yes - both sides | yes - one side | none |

### Example 3

PP355 batteries were tested to determine the change in rate capability over time when stored under different air exposure (constant throttling) conditions and different environmental (temperature and humidity) conditions. The PP355 batteries in this example had negative electrodes containing about 2.32 grams of zinc and a potassium hydroxide electrolyte with about 33 weight percent KOH. The different throttling conditions allowed air to enter the battery at different rates, thereby consuming battery capacity and degrading the battery discharge rate capability at different rates. With no air restriction, a fresh PP355 cell can produce about 100 mA (order of magnitude) when tested after 30 seconds at a constant voltage of 1.1 volt. When covered with a sealing tab similar to sealing tabs used for button zinc-air cell batteries, the initial battery rate capability is lowered or limited to about 1 µA (5 orders of magnitude). Various other semi-permeable materials were used to restrict air access to the battery to varying intermediate degrees. Cells were stored at 21 °C and 50 percent relative humidity under a variety of throttling conditions. Periodically some cells from each throttling condition were removed from storage, the throttling tape was removed, and the unthrottled cells tested on the limiting current test to determine the decline in rate capability, which was plotted as a function of time stored for each throttling storage conditon. A "T curve" nomenclature describes the effect of throttling on rate capability while throttled, with the number after the T providing an order-of magnitude approximation of the maximum sustainable rate the throttled battery can provide in mA. Therefore a T100 curve indicates that the throttled cell is capable of sustaining 100 mA of current, and a T0.001 curve means the throttled cell can provide 1 µA of current.

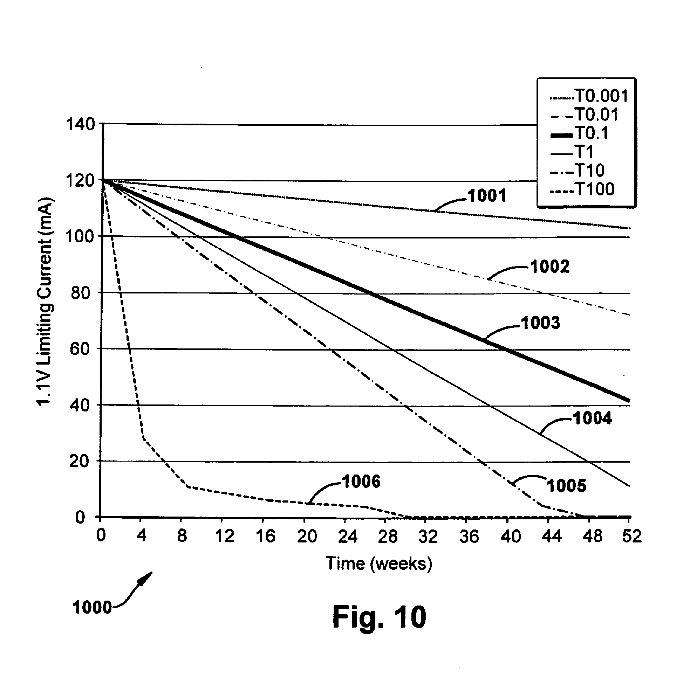

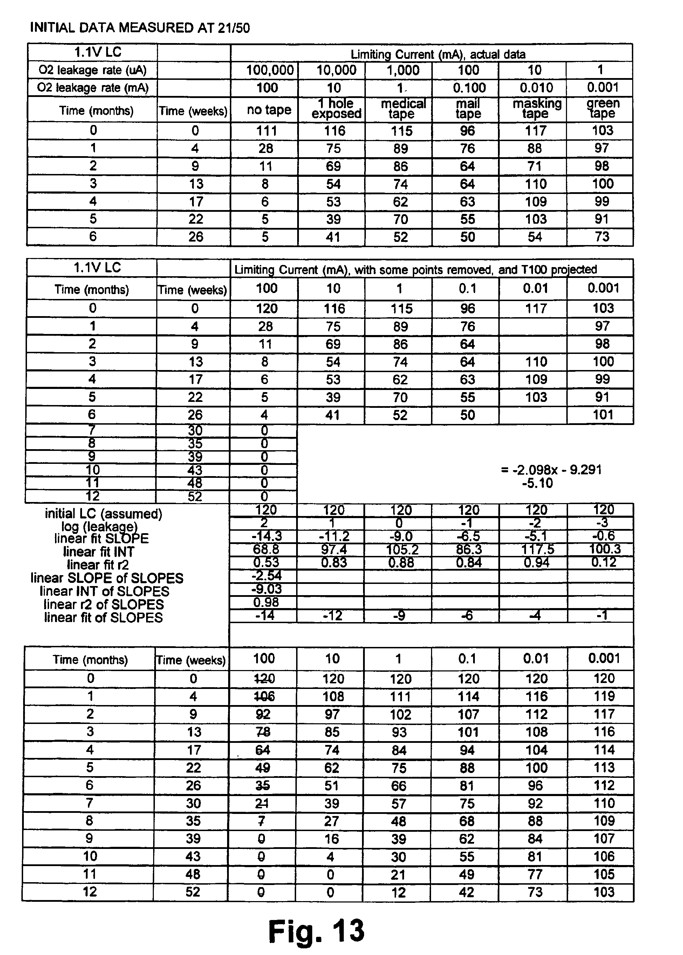

From these test data, "T curves" were plotted to describe the effect of throttling on rate capability while throttled, as shown in FIG. 10. Each curve is identified in the legend with the letter "T" followed by a number, with the number providing an order-of-magnitude approximation of the maximum sustainable rate in mA that the throttled battery can provide. T curves were generated for T100 (line 1006), T10 (line 1005), T1 (line 1004), T0.1 (line 1003), T0.01 (line 1002), and T0.001 (line 1001) for a temperature of 21°C, with time on the x-axis and limiting current on the y axis. Each of the curves shows the deterioration in unthrottled rate capability (limiting current in mA) as a function of storage time in a throttled condition. FIG. 13 is a tabular summary of the same test data.

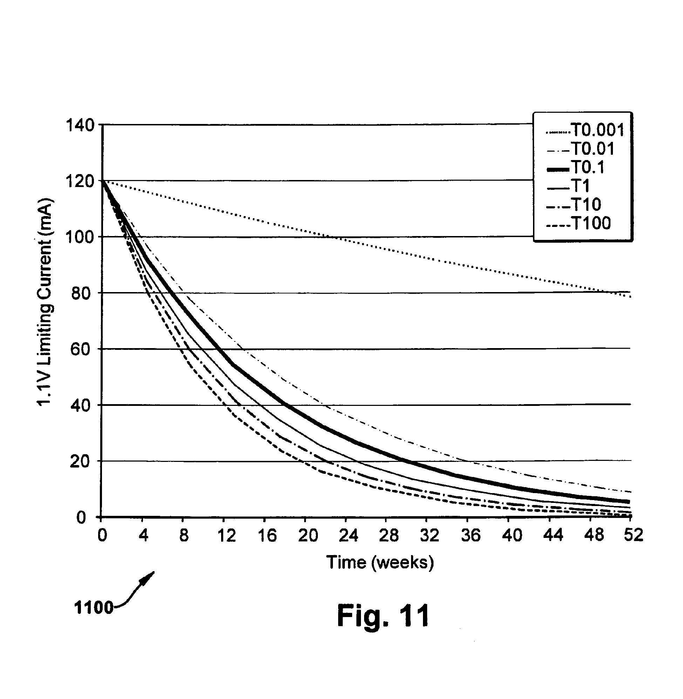

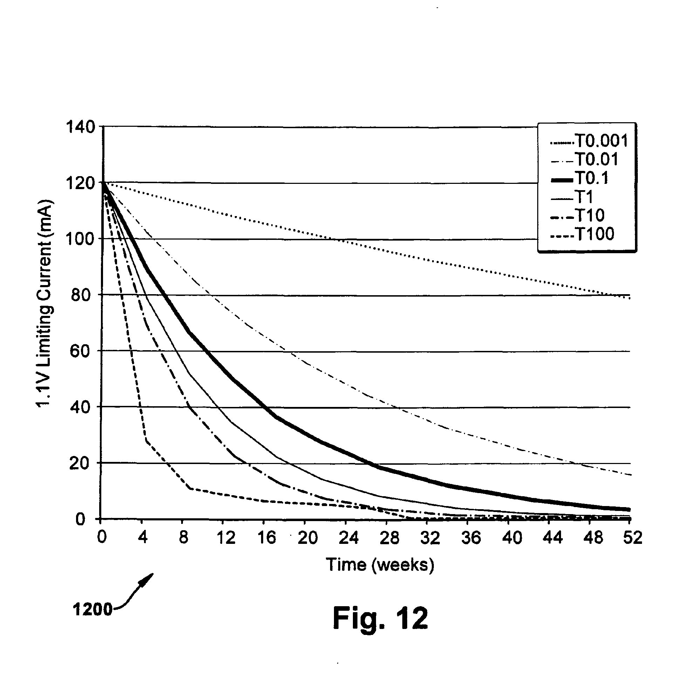

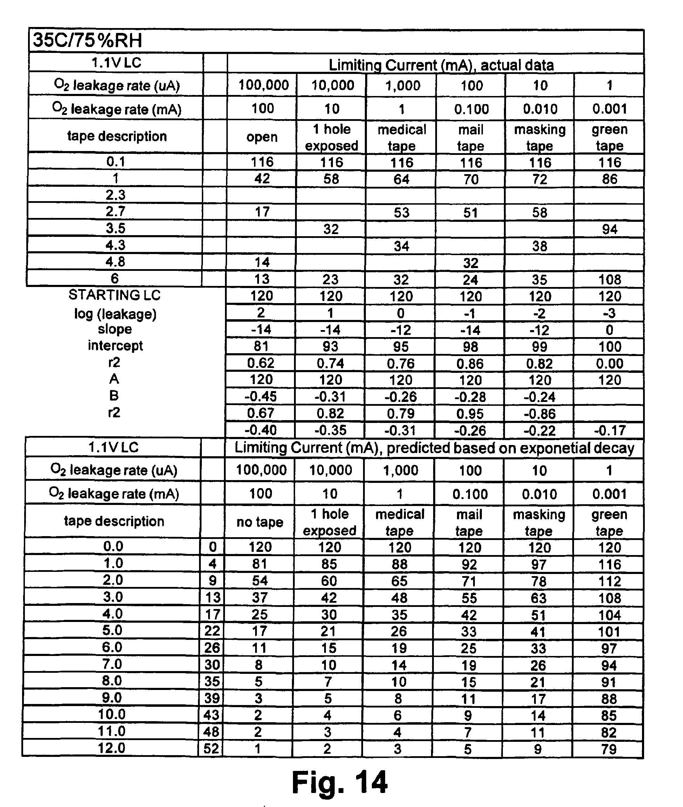

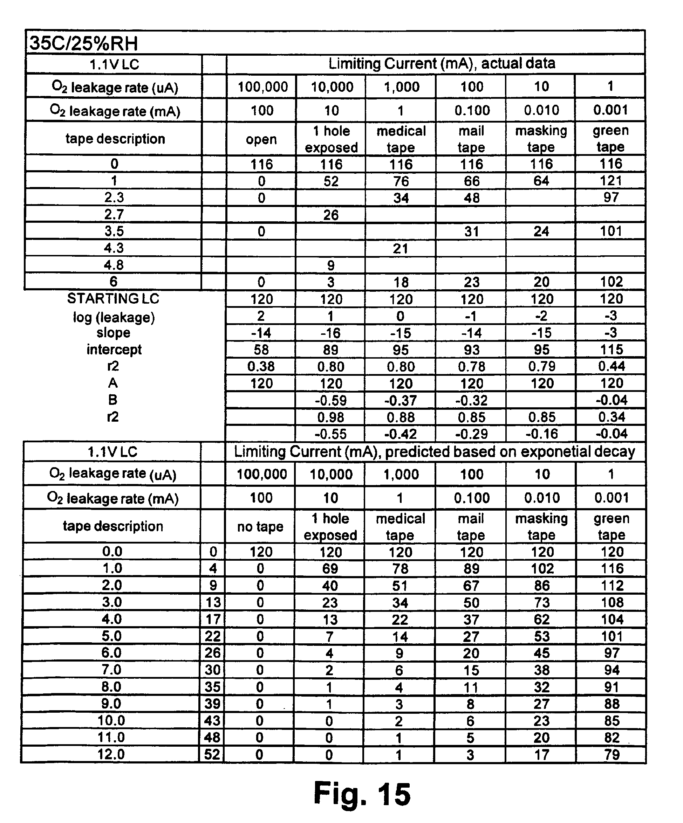

PP355 batteries stored at 35°C, 75 percent relative humidity and 35°C, 25 percent relativity were also tested for limiting current under the same throttling conditions described above for PP355 batteries stored at 21 °C and 50 percent relativity. The T curves generated are shown in FIGS. 11 and 12, respectively, and corresponding tabular summaries are shown in FIGs. 14 and 15, respectively.

With such T curves, an air management system can be designed to insure the battery and device will perform as expected, or determine that the battery and device are not a good fit, as illustrated in Example 4.

### Example 4

Method 900 with the plot 1000 of FIG. 10 were used to select a battery and air management system for a device. The device was a Bluetooth headset having requirements of up to 50 mW of constant power discharge and an operational lifetime of 1 year at 21°C and 50 percent relative humidity. These requirements are obtained at block 902. A gas consuming battery was selected at block 904. From FIG. 10, a PP355 battery can produce about 100 mA of current at 1.1 V (about 110 mW), so this battery met the requirement for providing the power required by the device when the battery is fresh.

The plot 1000 is referenced to determine if no air management is sufficient to meet the device characteristics at block 906. Without air management, line 1006 (T100) shows that current output would drop below 50 mW within 4 weeks. Thus, no air management is not an option for an operational lifetime of 1 year.

The plot 1000 was referenced to determine if passive air management (constant throttling) would be sufficient to meet the device characteristics at block 908. Line 1005 (T10) represents a cell that can only provide up to 10 mA at 1.1 V when throttled, which is insufficient for the 50 m W power requirement of the device. By interpolating between lines 1006 and 1005, a T50 line was estimated, representing a cell that can provide 50 mA at 1.1 V (or about 55 mW), which would meet the minimum power requirement of the device, but the expected operational lifetime would only be about 16 weeks, well short of the 1 year desired. Thus, throttling air management was determined to be insufficient to meet the device requirements.

The plot 1000 was again referenced to determine if active air management (valving) would be sufficient to meet the device characteristics at block 910. Assuming an active air management system including a valve that when closed yields operation characteristics similar to line 1002 (T0.01)it was determined that this type of valve would permit a rate capability of about 70 mA (more than 70 mW) after 1 year, which is sufficient to meet the device requirements. It was also determined from line 1001 (T0.001) that an improved seal would yield improved operation characteristics and would also be sufficient to meet the device requirements. As a result, an active air management system and the PP355 battery were selected at block 912.

## Claims

1. A device (10) comprising:
a battery compartment (16) and at least one fluid consuming battery (40) received in said battery compartment (16), wherein said fluid consuming battery (40) includes a fluid consuming electrode (50), a negative electrode (54) including a metal as the active material and an aqueous alkaline electrolyte, a separator (52) disposed between the fluid consuming electrode (50) and the negative electrode (54), and a first fluid entry port (42);
a second fluid entry port (20) formed in a device wall; and
a fluid flow restrictor (30, 60) disposed in fluid communication between the first and second fluid entry ports (20, 42) and compressed between the device wall and the fluid consuming battery (40) such that a rate of flow of a fluid from outside the device (10) to the fluid consuming electrode (50) is controlled by a compressed portion of the fluid flow restrictor (30, 60), **characterized in that** the fluid is air and the fluid flow restrictor (30, 60) comprises a foam material.

2. The device (10) as defined in claim 1, wherein the fluid flow restrictor (30, 60) comprises a plurality of components.

3. The device (10) as defined in any previous claim, wherein the fluid flow restrictor (30, 60) comprises a plurality of layers.

4. The device (10) as defined in claim 3, wherein the fluid flow restrictor (60) comprises a fluid control layer (62) and a backing layer (64).

5. The device (10) as defined in claim 4, wherein the backing layer (64) is compressible and has a first fluid permeability, the fluid control layer (62) has a second fluid permeability, and the first fluid permeability is equal to or greater than the second fluid permeability.

6. The device (10) as defined in any previous claim, wherein the device (10) comprises a cover (18), and the fluid flow restrictor (30, 60) is compressed between the cover (18) and the at least one fluid consuming battery (40).

7. The device (10) as defined in claim 6, wherein the second fluid entry port (20) is formed in a device wall that is not a cover (18).

8. The device (10) as defined in claim 6, wherein the second fluid entry port (20) is formed in the cover (18), and the fluid flow restrictor (30, 60) comprises a fluid permeation path from a surface of the fluid flow restrictor (30, 60) adjacent the second fluid entry port (20) to an opposite surface of the fluid flow restrictor (30, 60) adjacent the first fluid entry port (42).

9. The device (10) as defined in claim 1, wherein the device wall comprises an inward projection and the fluid flow restrictor (30, 60) is compressed between a surface of the projection and a surface of the at least one fluid consuming battery (40) such that the fluid flow restrictor (30, 60) compressed therebetween has a fluid permeability less than a fluid permeability of the fluid permeation path.

10. The device (10) as defined in claim 1, wherein the fluid flow restrictor (30, 60) comprises a seal (70) between the device wall and the at least one fluid consuming battery (40).

11. The device (10) as defined in claim 10, wherein fluid is able to pass through the second and first fluid entry ports (20, 42) and to the fluid consuming electrode (50) and fluid is prevented from flowing through the seal (70).

12. The device (10) as defined in claim 10, wherein the seal (70) comprises an annular seal member.

13. The device (10) as defined in claim 10, wherein the fluid flow restrictor (30, 60) further comprises a central portion disposed radially inward from the seal (70) and compressed between the first and second fluid entry ports (20, 42) with a fluid permeation path from a surface adjacent the second fluid entry port (20), through the compressed central portion to an opposite surface adjacent the first fluid entry port (42).

14. The device (10) as defined in any previous claim, wherein the at least one fluid consuming battery (40) comprises an air consuming cell with an oxygen consuming electrode.

15. The device (10) as defined in any previous claim, wherein the at least one fluid consuming battery (40) is replacably disposed in the device (10).

16. The device (10) as defined in any previous claim comprising an air manager consisting of the fluid flow restrictor (30, 60).

## Patentansprüche

1. Vorrichtung (10), umfassend:
ein Batteriekompartiment (16) und wenigstens eine fluidverbrauchende Batterie (40), die in dem Batteriekompartiment (16) aufgenommen ist, wobei die fluidverbrauchende Batterie (40) eine fluidverbrauchende Elektrode (50), eine negative Elektrode (54) einschließlich eines Metalls als aktivem Material und eines wässrigen alkalischen Elektrolyten, einen Separator (52), der sich zwischen der fluidverbrauchenden Elektrode (50) und der negativen Elektrode (54) befindet, sowie einen ersten Fluideintrittsanschluss (42) umfasst;
einen zweiten Fluideintrittsanschluss (20), der in einer Wand der Vorrichtung gebildet ist; und
einen Fluidstrombegrenzer (30, 60), der sich in Fluidverbindung zwischen dem ersten und dem zweiten Fluideintrittsanschluss (20, 42) befindet und zwischen der Wand der Vorrichtung und der fluidverbrauchenden Batterie (40) zusammengedrückt ist, so dass die Strömungsgeschwindigkeit eines Fluids von außerhalb der Vorrichtung (10) zur fluidverbrauchenden Elektrode (50) durch einen zusammengedrückten Teil des Fluidstrombegrenzers (30, 60) gesteuert wird, **dadurch gekennzeichnet, dass** das Fluid Luft ist und der Fluidstrombegrenzer (30, 60) einen Schaumstoff umfasst.

2. Vorrichtung (10) gemäß Anspruch 1, wobei der Fluidstrombegrenzer (30, 60) eine Vielzahl von Komponenten umfasst.

3. Vorrichtung (10) gemäß einem der vorstehenden Ansprüche, wobei der Fluidstrombegrenzer (30, 60) eine Vielzahl von Schichten umfasst.

4. Vorrichtung (10) gemäß Anspruch 3, wobei der Fluidstrombegrenzer (60) eine Fluidkontrollschicht (62) und eine Trägerschicht (64) umfasst.

5. Vorrichtung (10) gemäß Anspruch 4, wobei die Trägerschicht (64) komprimierbar ist und eine erste Fluidpermeabilität aufweist, die Fluidkontrotlschicht (62) eine zweite Fluidpermeabilität aufweist und die erste Fluidpermeabilität größer oder gleich der zweiten Fluidpermeabilität ist.

6. Vorrichtung (10) gemäß einem der vorstehenden Ansprüche, wobei die Vorrichtung (10) eine Abdeckung (18) umfasst und der Fluidstrombegrenzer (30, 60) zwischen der Abdeckung (18) und der wenigstens einen fluidverbrauchenden Batterie (40) zusammengedrückt ist.

7. Vorrichtung (10) gemäß Anspruch 6, wobei der zweite Fluideintrittsanschluss (20) in einer Wand der Vorrichtung, die keine Abdeckung (18) ist, gebildet ist.

8. Vorrichtung (10) gemäß Anspruch 6, wobei der zweite Fluideintrittsanschluss (20) in der Abdeckung (18) gebildet ist und der Fluidstrombegrenzer (30, 60) einen Fluidpermeationsweg ausgehend von einer Fläche des Fluidstrombegrenzers (30, 60) neben dem zweiten Fluideintrittsanschluss (20) zu einer gegenüberliegenden Fläche des Fluidstrombegrenzers (30, 60) neben dem ersten Fluideintrittsanschluss (42) umfasst.

9. Vorrichtung (10) gemäß Anspruch 1, wobei die Wand der Vorrichtung einen nach innen gerichteten Vorsprung umfasst und der Fluidstrombegrenzer (30, 60) zwischen einer Fläche des Vorsprungs und einer Fläche der wenigstens einen fluidverbrauchenden Batterie (40) zusammengedrückt ist, so dass der dazwischen zusammengedrückte Fluidstrombegrenzer (30, 60) eine kleinere Fluidpermeabilität aufweist als der Fluidpermeationsweg.

10. Vorrichtung (10) gemäß Anspruch 1, wobei der Fluidstrombegrenzer (30, 60) eine Dichtung (70) zwischen der Wand der Vorrichtung und der wenigstens einen fluidverbrauchenden Batterie (40) umfasst.

11. Vorrichtung (10) gemäß Anspruch 10, wobei Fluid durch den zweiten und ersten Fluideintrittsanschluss (20, 42) zur fluidverbrauchenden Elektrode (50) strömen kann und verhindert wird, dass Fluid durch die Dichtung (70) strömt.

12. Vorrichtung (10) gemäß Anspruch 10, wobei die Dichtung (70) ein ringförmige Dichtungselement umfasst.

13. Vorrichtung (10) gemäß Anspruch 10, wobei der Fluidstrombegrenzer (30, 60) weiterhin einen Mittelteil umfasst, der ausgehend von der Dichtung (70) radial nach innen verläuft und zwischen dem ersten und dem zweiten Fluideintrittsanschluss (20, 42) zusammengedrückt ist, wobei ein Fluidpermeationsweg ausgehend von einer Fläche neben dem zweiten Fluideintrittsanschluss (20) durch den zusammengedrückten Mittelteil zu einer gegenüberliegenden Fläche neben dem ersten Fluideintrittsanschluss (42) verläuft.

14. Vorrichtung (10) gemäß einem der vorstehenden Ansprüche, wobei die wenigstens eine fluidverbrauchende Batterie (40) eine luftverbrauchende Zelle mit einer sauerstoffverbraucheriden Elektrode umfasst.

15. Vorrichtung (10) gemäß einem der vorstehenden Ansprüche, wobei die wenigstens eine fluidverbrauchende Batterie (40) austauschbar in der Vorrichtung (10) angeordnet ist.

16. Vorrichtung (10) gemäß einem der vorstehenden Ansprüche, die einen Luftregler umfasst, der aus dem Fluidstrombegrenzer (30, 60) besteht.

## Revendications

1. Dispositif (10) comprenant:
un compartiment à piles (16) et au moins une pile consommatrice de fluide (40) logée dans ledit compartiment à piles (16), ladite pile consommatrice de fluide (40) englobant une électrode consommatrice de fluide (50), une électrode négative (54) englobant un métal à titre de matière active et un électrolyte alcalin aqueux, un séparateur (52) disposé entre l'électrode consommatrice de fluide (50) et l'électrode négative (54), et un premier orifice d'entrée (42) pour le fluide ;
un deuxième orifice d'entrée (20) pour le fluide pratiqué dans une paroi du dispositif ; et
un élément de restriction de l'écoulement du fluide (30, 60) mis en communication par fluide entre le premier et le deuxième orifice d'entrée (20, 42) pour le fluide et comprimé entre la paroi du dispositif et la pile consommatrice de fluide (40), de telle sorte que le débit de l'écoulement d'un fluide depuis l'extérieur du dispositif (10) en direction de l'électrode consommatrice de fluide (50) est réglé par la portion comprimée de l'élément de restriction de l'écoulement de fluide (30, 60), **caractérisé en ce que** le fluide est de l'air et l'élément de restriction de l'écoulement de fluide (30, 60) comprend une matière en mousse.

2. Dispositif (10) tel que défini à la revendication 1, dans lequel l'élément de restriction de l'écoulement de fluide (30, 60) comprend plusieurs composants.

3. Dispositif (10) tel que défini dans l'une quelconque des revendications précédentes, dans lequel l'élément de restriction de l'écoulement de fluide (30, 60) comprend plusieurs couches.

4. Dispositif (10) tel que défini à la revendication 3, dans lequel l'élément de restriction de l'écoulement de fluide (60) comprend une couche de réglage du fluide (62) et une couche dorsale (64).

5. Dispositif (10) tel que défini à la revendication 4, dans lequel la couche dorsale (64) est compressible et possède une première perméabilité de fluide, la couche de réglage du fluide (62) possède une deuxième perméabilité de fluide, et la première perméabilité de fluide est égale ou supérieure à la deuxième perméabilité de fluide.

6. Dispositif (10) tel que défini dans l'une quelconque des revendications précédentes, dans lequel le dispositif (10) comprend un couvercle (18) et l'élément de restriction de l'écoulement de fluide (30, 60) est comprimé entre le couvercle (18) et ladite au moins une pile consommatrice de fluide (40).

7. Dispositif (10) tel que défini à la revendication 6, dans lequel le deuxième orifice d'entrée (20) pour le fluide est pratiqué dans une paroi du dispositif qui n'est pas le couvercle (18).

8. Dispositif (10) tel que défini à la revendication 6, dans lequel le deuxième orifice d'entrée (20) pour le fluide est pratiqué dans le couvercle (18), et l'élément de restriction de l'écoulement de fluide (30, 60) comprend une voie de perméation de fluide s'étendant entre la surface de l'élément de restriction de l'écoulement de fluide (30, 60) adjacente au deuxième orifice d'entrée (20) pour le fluide et la surface opposée de l'élément de restriction de l'écoulement de fluide (30, 60) adjacente au premier orifice d'entrée (42).

9. Dispositif (10) tel que défini à la revendication 1, dans lequel la paroi du dispositif comprend une saillie interne et l'élément de restriction de l'écoulement de fluide (30, 60) est comprimé entre la surface de la saillie et la surface de ladite au moins une pile consommatrice de fluide (40), de telle sorte que l'élément de restriction de l'écoulement de fluide (30, 60) comprimé entre elles possède une perméabilité de fluide inférieure à la perméabilité de fluide de la voie de perméation de fluide.

10. Dispositif (10) tel que défini à la revendication 1, dans lequel l'élément de restriction de l'écoulement de fluide (30, 60) comprend un joint d'étanchéité (70) entre la paroi du dispositif et ladite au moins une pile consommatrice de fluide (40).

11. Dispositif (10) tel que défini à la revendication 10, dans lequel du fluide a la possibilité de passer par le deuxième et le premier orifice d'entrée (20, 42) pour le fluide et en direction de l'électrode consommatrice de fluide (50), le fluide étant empêché de s'écouler à travers le joint d'étanchéité (70).

12. Dispositif (10) tel que défini à la revendication 10, dans lequel le joint d'étanchéité (70) comprend un membre d'étanchéité annulaire.

13. Dispositif (10) tel que défini à la revendication 10, dans lequel l'élément de restriction de l'écoulement de fluide (30, 60) comprend en outre une portion centrale disposée à l'intérieur du joint d'étanchéité (70) en direction radiale et comprimée entre le premier et le deuxième orifice d'entrée (20, 42) pour le fluide, une voie de perméation pour le fluide s'étendant depuis la surface adjacente au deuxième orifice d'entrée (20) pour le fluide, en passant par la portion centrale comprimée, jusqu'à la surface opposée adjacente au premier orifice d'entrée (42) pour le fluide.

14. Dispositif (10) tel que défini dans l'une quelconque des revendications précédentes, dans lequel ladite au moins une pile consommatrice de fluide (40) comprend une cellule à consommation d'air comprenant une électrode consommatrice d'oxygène.

15. Dispositif (10) tel que défini dans l'une quelconque des revendications précédentes, dans lequel ladite au moins une pile consommatrice de fluide (40) est disposée de manière à pouvoir être remplacée dans le dispositif (10).

16. Dispositif (10) tel que défini dans l'une quelconque des revendications précédentes, comprenant un gestionnaire d'air constitué par l'élément de restriction de l'écoulement de fluide (30, 60).
